# EUROPÄISCHE PATENTSCHRIFT

(11) **EP 0 661 667 B1**
(45) Veröffentlichungstag und Bekanntmachung des Hinweises auf die Patenterteilung: **01.03.2000**
(21) Anmeldenummer: 94120026.3
(22) Anmeldetag: 17.12.1994
(51) Int. Cl.: G06T 7/20

(54) **Verfahren und Vorrichtung zur Bewegungsschätzung**
Movement estimation process and apparatus
Méthode et appareil de détection de mouvement

(30) Priorität: 30.12.1993 DE 4344924
(43) Veröffentlichungstag der Anmeldung: 05.07.1995
(73) Patentinhaber: DEUTSCHE THOMSON-BRANDT GMBH, 78048 Villingen-Schwenningen (DE)
(72) Erfinder: Keesen, Heinz-Werner, D-30173 Hanover (DE)
(74) Vertreter: Hartnack, Wolfgang, Dipl.-Ing.

(56) Entgegenhaltungen:
- EP-A- 0 508 476
- WO-A-89/08891

## Beschreibung

Die Erfindung betrifft ein Verfahren und eine Vorrichtung zur Bewegungsschätzung in Bildsignalen.

### Stand der Technik

Bei der datenreduzierenden Codierung/Decodierung von digitalen Bildsignalen wird in vielen Fällen eine bewegungskompensierte Interpolation von Bildpunkt-Werten zugrunde gelegt (Interframe-Codierung). Zu diesem Zweck werden Bewegungsvektoren bzw. Verschiebungsvektoren für Bildpunkt-Blöcke benötigt. Diese Bewegungsvektoren werden normalerweise im Encoder mittels einer Bewegungsschätzung generiert.
Dabei wird jeweils für einen Bildpunkt-Block mit z.B. 8*8 Luminanz-Bildpunkten aus dem aktuellen Bild innerhalb eines Suchbereichs, der aus einem vergrößerten Bildpunkt-Block von z.B. 16*16 Luminanz-Bildpunkten des vorhergehenden Bildes besteht und als Suchfenster bezeichnet wird, ein Vergleich durchgeführt.
Mittels MSE (mean squared error) oder MAE (mean absolute error) wird innerhalb des Suchbereichs der 8*8-Block mit der höchsten Korrelation ermittelt und aus dessen räumlicher Lage im Vergleich zu dem Block aus dem aktuellen Bild der jeweilige Bewegungsvektor ermittelt.
Dieses Verfahren ist äußerst rechenintensiv und erfordert sehr hohe Taktraten. Selbst bei hierarchischen Suchverfahren ist noch eine komplexe und schnelle Hardware erforderlich.

### Erfindung

Der Erfindung liegt die Aufgabe zugrunde, ein weniger rechenintensives Verfahren zur Bewegungsschätzung anzugeben. Diese Aufgabe wird durch das in Anspruch 1 angegebene Verfahren gelöst.

Der Erfindung liegt die weitere Aufgabe zugrunde, eine Vorrichtung für das erfindungsgemäße Verfahren anzugeben. Diese Aufgabe wird durch die in Anspruch 7 angegebene Vorrichtung gelöst.

Im Stand der Technik beschreibt EP-A-0 508 471 ein System zur Bewegungserkennung in zwei aufeinanderfolgenden Blöcken eines Videosignals und WO89/08891 ein Verfahren zum Vergleich von Datenblöcken für die Kodierung von Videosignalen. EP'471 verwendet eine festdefinierte Menge von Bildelementen als Referenzpunkte im Vergleich von zwei aufeinanderfolgenden Blöcken. Die Vergleichsoperation beruht hierbei auf voller Wortlange, allerdings wird eine Speichereinsparung durch eine Entfernung der MSB erreicht. WO89/08891 berechnet die Ähnlichkeit zwischen Blöcken auf Pixelbasis und ermittelt die vertikale oder horizontale Verschiebung der Blöcke. Der Kernpunkt dieser Erfindung liegt in der Einschränkung der Suchoperation auf einen vordefinierten Bereich in einem Block gesehen.

Bei üblichen Bewegungsschätz-Verfahren werden Bildpunkt-Werte mit voller Wortlänge von z.B. 8 Bit verwendet. Ausführliche Untersuchungen haben nun gezeigt, daß eine Bewegungsschätzung auch durch Auswertung nur bestimmter Bits, z.B. des MSB oder der beiden MSB's, der Bildpunkt-Werte erfolgen kann. Dazu werden diese Bits (aus den Bildpunkt-Werten des aktuellen und des vorhergehenden und/oder nachfolgenden Bildes) mittels logischer Operationen verknüpft und die einzelnen Ergebnisse für die verschiedenen Block-Positionen des aktuellen Blocks (z.B. 8*8-Block) innerhalb des Suchfensters jeweils kombiniert. Mittels eines nachfolgenden Minimum- oder Maximum-Vergleichs wird dann der jeweilige Vektor für den aktuellen Block bestimmt. Die logischen Operationen sind vorzugsweise EXOR- und/oder EXNOR-Funktionen, deren Ergebnisse innerhalb des jeweiligen Such-Blocks gezählt und/oder addiert werden.

Im Prinzip besteht daß erfindungsgemäße Verfahren darin, daß zur Bewegungsschätzung in Bildsignalen, bei dem jeweils innerhalb eines Suchbereichs ein Referenz-Bildpunktblock (BS) mit entsprechenden Bildpunktblöcken (SAS) eines oder mehrerer benachbarter Bilder verglichen und ein Bewegungsvektor entsprechend der Position mit der prinzipiell höchsten Korrelation ermittelt wird, bei diesem Vergleich von den Bildpunkt-Werten jeweils nur das MSB (most significant bit) und/oder weitere der MSB's (most significant bits), im folgenden allgemein als MSB's bezeichnet, verwendet wird/werden.

Vorteilhafte Weiterbildungen des erfindungsgemäßen Verfahrens ergeben sich aus den zugehörigen abhängigen Ansprüchen.

Im Prinzip ist die erfindungsgemäße Vorrichtung zur Bewegungsschätzung in Bildsignalen, bei der jeweils innerhalb eines Suchbereichs ein Referenz-Bildpunktblock mit entsprechenden Bildpunktblöcken eines oder mehrerer benachbarter Bilder verglichen und ein Bewegungsvektor entsprechend der Position mit der prinzipiell höchsten Korrelation ermittelt wird, versehen mit:
- Speichermitteln zur Speicherung des Referenz-Bildpunktblocks und der Bildpunktblöcke eines oder mehrerer benachbarter Bilder;
- mit den Speichermitteln verbundenen EXOR- oder EXNOR-Gattern, denen jeweils nur das MSB (most significant bit) und/oder weitere der MSB's (most significant bits), im folgenden allgemein als MSB's bezeichnet, dieser Bildpunkt-Werte zugeführt wird bzw. werden;
- Mitteln zur Addition, Zählung und/oder Zwischenspeicherung der Vergleichs-Ergebnisse für jeden dieser Bildpunkt-Werte aus den EXOR- bzw. EXNOR-Gattern, die aus der Suchposition mit dem Minimum bzw. dem Maximum der Summe oder des Zählergebnisses den Bewegungsvektor ermitteln.

Vorteilhafte Weiterbildungen der erfindungsgemäßen Vorrichtung ergeben sich aus den zugehörigen abhängigen Ansprüchen.

### Zeichnungen

Anhand der Zeichnungen sind Ausführungs-Beispiele der Erfindung beschrieben. Diese zeigen in:
- Fig. 1: Block aus dem aktuellen Bild und Suchbereich aus dem vorhergehenden Bild;
- Fig. 2: Blockdiagramm eines erfindungsgemäßen Bewegungsschätzers;
- Fig. 3: Blockdiagramm eines weiteren erfindungsgemäßen Bewegungsschätzers.

### Ausführungs-Beispiele

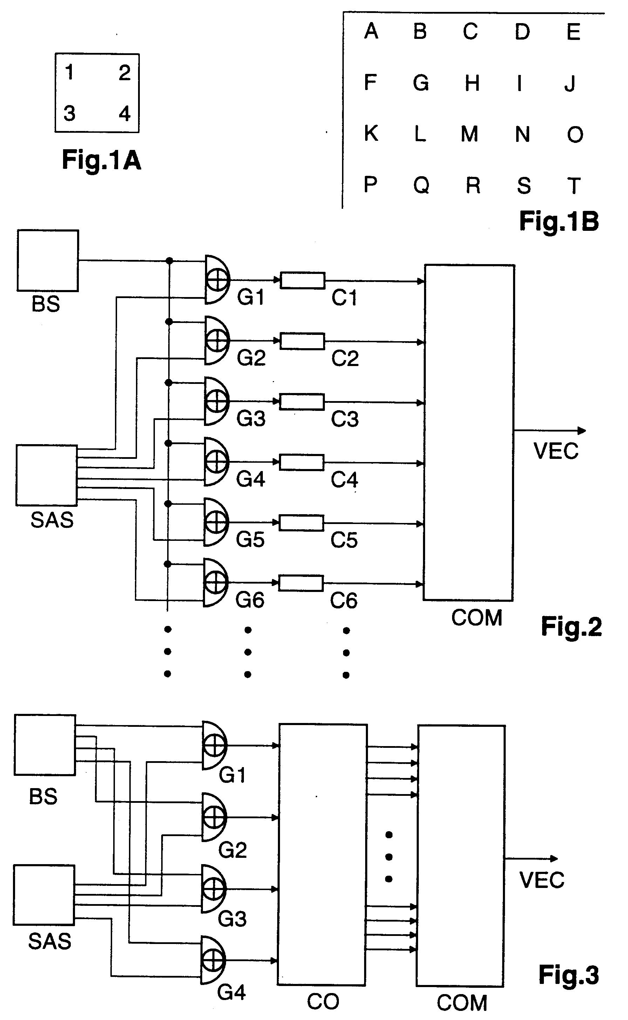

Die in Fig. 1 dargestellten Blöcke beziehen sich aus Gründen der Übersichtlichkeit auf eine Block-Größe von 2*2-Bildpunkten. Tatsächlich werden Blockgrößen von z.B. 8*8 oder 16*16 Bildpunkten verwendet. Für die Ermittlung eines ersten Kombinations-Ergebnisses werden in aufeinanderfolgenden Takten CL in einer EXOR- oder EXNOR-Funktion die MSB's der Bildpunkt-Werte des aktuellen Blocks mit den MSB's der Suchbereich-Bildpunkte A...T (Größe des Suchbereichs kann beliebig gewählt werden) nach folgender Tabelle verknüpft:

| EXOR | CL |
|---|---|
| 1 ⊕ A | 1 |
| 2 ⊕ B | 2 |
| 3 ⊕ F | 3 |
| 4 ⊕ G | 4 |

Für die Ermittlung des zweiten Kombinations-Ergebnisses werden in aufeinanderfolgenden Takten CL die MSB's entsprechend der folgenden Tabelle verknüpft:

| EXOR | CL |
|---|---|
| 1 ⊕ B | 1 |
| 2 ⊕ C | 2 |
| 3 ⊕ G | 3 |
| 4 ⊕ H | 4 |

Die Reihenfolge kann verschieden sein:
A)
   Entsprechend vorstehenden Tabellen wird zunächst mit Takt CL='1' MSB '1' (bzw. die mehreren der Position von MSB '1' entsprechenden MSB's) gleichzeitig in einer entsprechenden Anzahl von EXOR-Funktionen mit den MSB's (bzw. den mehreren der Position von MSB '1' entsprechenden MSB's) von A, B, C,...,N verknüpft, danach wird mit Takt CL='2' MSB '2' gleichzeitig in diesen EXOR- oder EXNOR-Funktionen mit den MSB's von B, C,...,O verknüpft, usw.. Die Einzel-Ergebnisse an den Ausgängen dieser EXOR- oder EXNOR-Funktionen werden jeweils aufsummiert und zwischengespeichert. Nach Abarbeitung des Suchbereichs für einen Block wird im Fall von EXOR-Funktionen die minimale dieser Summen und im Fall von EXNOR-Funktionen die maximale dieser Summen für den Suchbereich ermittelt und aus der zugehörigen Suchposition (d.h. wo möglichst viele der 2*2 MSB's der beiden Blöcke gleich sind) der entsprechende Bewegungsvektor bestimmt.
B)
   Zunächst wird mit Takt CL='1' in parallelen EXOR- oder EXNOR-Funktionen MSB '1' mit MSB 'A', MSB '2' mit MSB 'B', MSB '3' mit MSB 'F' und MSB '4' mit MSB 'G' verknüpft und direkt das Kombinationsergebnis bzw. die Summe dieser vier Einzelergebnisse ermittelt und zwischengespeichert. Anschließend wird mit Takt CL='2' in parallelen EXOR-Funktionen MSB '1' mit MSB 'B', MSB '2' mit MSB 'C', MSB '3' mit MSB 'G' und MSB '4' mit MSB 'H' verknüpft und das entsprechende Kombinationsergebnis ermittelt, usw.. Nach Abarbeitung des Suchbereichs für einen Block wird im Fall von EXOR-Funktionen die minimale dieser Summen und im Fall von EXNOR-Funktionen die maximale dieser Summen für den Suchbereich ermittelt und aus der zugehörigen Suchposition (d.h. wo möglichst viele der 2*2 MSB's der beiden Blöcke gleich sind) der entsprechende Bewegungsvektor bestimmt.

Der Bewegungsschätzer nach Fig. 2 ist für Version A) geeignet und enthält Block-Speichermittel BS für die Bildpunkt-Werte oder die erforderlichen Bits (z.B. das MSB oder die 2 oder die 4 MSB's) dieser Werte des aktuellen Blocks. In Suchbereich-Speichermitteln SAS werden die Bildpunkt-Werte oder die entsprechenden MSB's für den Suchbereich gespeichert. Das benötigte Bit oder die benötigten Bits dieser Bildpunkt-Werte werden EXOR-oder EXNOR-Gattern G1, G2,..., G6... zugeführt. Ein Ausgang von BS, über den nacheinander die MSB's '1', '2','3' und '4' ausgegeben werden, ist mit allen Gattern verbunden. Von SAS ist eine der Anzahl der Bildpunkte des Suchbereichs entsprechende Anzahl von Leitungen mit jeweils einem der Gatter G1, G2,..., G6... verbunden. Die Gatter-Ausgangswerte werden für jede der Suchpositionen jeweils in einem Addierer aufsummiert. Vorteilhaft kann aufgrund der 1-Bit-Werte diese Aufsummierung der Einzel-Ergebnisse mit Zählern C1, C2,..., C6... erfolgen. Für jede Suche für einen Block wird das Maximum bzw. das Minimum der Zählerergebnisse in nachfolgenden Komparatormitteln COM ermittelt und aus der zugehörigen Suchposition der entsprechende Bewegungsvektor bestimmt.
Falls für die Suche mehrere (n) MSB's parallel ausgewertet werden, kann die Schaltung auf verschiedene Weise erweitert werden:
a) n Gatter, n Zähler (im Fall von MSB und MSB⁻¹ oder MSB⁻¹ und MSB⁻² ist n=2), die entsprechend parallel angeordnet sind;
b) vorzugsweise n Gatter, ein mit n-facher Geschwindigkeit arbeitender Zähler oder ein Addierer;
c) Wie a) oder b), jedoch wird zu einem bzw. zu mehreren der MSB's aus BS und aus SAS vor der Auswertung in den Gattern ein festgelegter Wert, z.B. 48, addiert oder subtrahiert. Dieser festgelegte Wert bzw. diese festgelegten Werte können der Bildstatistik laufend angepaßt werden;
d) Es werden nicht immer die gleichen Bits ausgewertet. Z.B. innerhalb eines Blocks werden jeweils zwei von den Bits MSB, MSB⁻¹ und MSB⁻² ausgewählt.

Diese Möglichkeiten können auch entsprechend kombiniert werden.

Der Bewegungsschätzer nach Fig. 3 ist für Version B) geeignet und enthält Block-Speichermittel BS für die Bildpunkt-Werte oder die erforderlichen Bits (z.B. das MSB oder die 2 oder die 4 MSB's) dieser Werte des aktuellen Blocks. In Suchbereich-Speichermitteln SAS werden die Bildpunkt-Werte oder die entsprechenden MSB's für den Suchbereich gespeichert. BS hat vier (je nach Blockgröße) Ausgänge, von denen jeder mit einem der vier EXOR- oder EXNOR-Gatter G1...G4 verbunden ist und über die das benötigte Bit oder die benötigten Bits dieser Bildpunkt-Werte den Gattern zugeführt werden. Entsprechendes gilt für SAS. Die Gatter-Ausgangswerte werden für jede der Suchpositionen jeweils in einer Addierschaltung C0 aufsummiert und für alle Suchpositionen zwischengespeichert. Vorteilhaft kann aufgrund der 1-Bit-Werte diese Aufsummierung der Einzel-Ergebnisse mit Zählern erfolgen. Für jede Suche für einen Block wird das Maximum bzw. das Minimum der Zählerergebnisse in nachfolgenden Komparatormitteln COM ermittelt und aus der zugehörigen Suchposition der entsprechende Bewegungsvektor bestimmt.
Die zu Fig. 2 genannten Erweiterungs-Möglichkeiten können bei der Schaltung nach Fig. 3 entsprechend angewendet werden.

Die Erfindung kann auch dazu verwendet werden, (z.B. lokale) Bewegungsvektoren in einem Decoder zu bilden.

Im Fall von bewegtem Bildinhalt bei Interlace-Bildern kann die Vektorsuche auch innerhalb von Blöcken, die nur aus Zeilen eines Halbbilds zusammengefaßt sind, durchgeführt werden.

Der Suchbereich kann auch nicht-quadratisch sein und/oder in seiner Ausdehnung variiert werden, insbesondere in Abhängigkeit von zeitlich und/oder räumlich vorhergehenden Suchergebnissen.

Die Erfindung kann auch bei der Vektorsuche für einen Referenzblock durch Vergleich mit entsprechenden Blöcken aus einem vorhergehendem und aus einem nachfolgenden Bild erfolgen (double-sided block matching).

Statt MSE oder MAE können auch andere Verfahren zur Fehlermaß-Berechnung verwendet werden.
Statt den Bewegungsvektor nach der jeweils höchsten Korrelation zu ermitteln, kann auch bewußt nicht die Position der höchsten Korrelation ausgewählt werden, wenn eine dazu naheliegende Position besser an die umgebenden Vektoren angepaßt ist.

Die Erfindung kann z.B. in MPEG-TV-Systemen, in digitalen Video-recordern und bei Bewegtbild-Übertragung über Telefonleitungen (ISDN) angewendet werden.

## Patentansprüche

1. Verfahren zur Bewegungsschätzung in Bildsignalen, bei dem jeweils innerhalb eines Suchbereichs ein Referenz-Bildpunktblock (BS) mit entsprechenden Bildpunktblöcken (SAS) eines oder mehrerer benachbarter Bilder verglichen und ein Bewegungsvektor entsprechend der Position mit der prinzipiell höchsten Korrelation ermittelt wird, **dadurch gekennzeichnet**, daß bei diesem Vergleich (G1...G6, C1...C6, COM) von den Bildpunkt-Werten jeweils nur das MSB-most significant bit- und/oder weitere der MSB's-most significant bits-, im folgenden allgemein als MSB's bezeichnet, verwendet wird/werden.

2. Verfahren nach Anspruch 1, **dadurch gekennzeichnet**, daß bei dem Vergleich die MSB's der Bildpunkt-Werte aus dem Referenzblock (BS) und aus dem Suchbereich (SAS) mit EXOR- oder EXNOR-Funktionen verknüpft werden.

3. Verfahren nach Anspruch 2, **dadurch gekennzeichnet**, daß bei der Verknüpfung für jeden dieser Bildpunkt-Werte das Ergebnis der EXOR- bzw. EXNOR-Funktion aufaddiert bzw. gezählt wird und aus der Suchposition mit dem Minimum bzw. dem Maximum der Summe oder des Zählergebnisses der Bewegungsvektor ermittelt wird.

4. Verfahren nach Anspruch 3, **dadurch gekennzeichnet**, daß mindestens n=2 MSB's für jeden Bildpunkt-Wert n EXOR- bzw. EXNOR-Funktionen aufaddiert bzw. gezählt werden, wobei jeweils entweder n parallele Zähler verwendet werden oder ein Zähler mit der n-fachen Geschwindigkeit verwendet wird.

5. Verfahren nach einem oder mehreren der Ansprüche 1 bis 4, **dadurch gekennzeichnet**, daß zu einem oder mehreren der MSB's vor dem Vergleich jeweils festgelegte, insbesondere einer Bildstatistik angepaßte, Werte addiert und/oder subtrahiert werden.

6. Verfahren nach einem oder mehreren der Ansprüche 1 bis 5, **dadurch gekennzeichnet**, daß innerhalb eines Bildpunkt-Blocks bei dem Vergleich bei verschiedenen Bildpunkt-Werten verschiedene der MSB's ausgewertet werden.

7. Vorrichtung für ein Verfahren nach einem oder mehreren der Ansprüche 1 bis 6 zur Bewegungsschätzung in Bildsignalen, bei der jeweils innerhalb eines Suchbereichs ein Referenz-Bildpunktblock (BS) mit entsprechenden Bildpunktblöcken (SAS) eines oder mehrerer benachbarter Bilder verglichen und ein Bewegungsvektor entsprechend der Position mit der prinzipiell höchsten Korrelation ermittelt wird, versehen mit:
- Speichermitteln (BS, SAS) zur Speicherung des Referenz-Bildpunktblocks und der Bildpunktblöcke eines oder mehrerer benachbarter Bilder;
- mit den Speichermitteln verbundenen EXOR- oder EXNOR-Gattern (G1, G2,..., G6...), denen jeweils nur das MSB (most significant bit) und/oder weitere der MSB's (most significant bits), im folgenden allgemein als MSB's bezeichnet, dieser Bildpunkt-Werte zugeführt wird bzw. werden;
- Mitteln (C1, C2,..., C6,..., COM, CO) zur Addition, Zählung und/oder Zwischenspeicherung der Vergleichs-Ergebnisse für jeden dieser Bildpunkt-Werte aus den EXOR- bzw. EXNOR-Gattern, die aus der Suchposition mit dem Minimum bzw. dem Maximum der Summe oder des Zählergebnisses den Bewegungsvektor ermitteln.

8. Vorrichtung nach Anspruch 7, **dadurch gekennzeichnet**, daß mindestens n=2 MSB's für jeden Bildpunkt-Wert in n parallelen EXOR- bzw. EXNOR-Gattern (G1, G2,..., G6...) aufaddiert bzw. gezählt werden, wobei jeweils entweder n parallele Zähler verwendet werden oder ein Zähler mit der n-fachen Geschwindigkeit verwendet wird.

9. Vorrichtung nach Anspruch 7 oder 8, **dadurch gekennzeichnet**, daß zu einem oder mehreren der MSB's vor dem Vergleich jeweils festgelegte, insbesondere einer Bildstatistik angepaßte, Werte addiert und/oder subtrahiert werden.

10. Verfahren oder Vorrichtung nach einem oder mehreren der Ansprüche 1 bis 9 zum Einsatz in MPEG-TV-Systemen, in digitalen Videorecordern und/oder bei Bewegtbild-Übertragung über Telefonleitungen (ISDN).

## Claims

1. Method for motion estimation in video signals, in which, in each case within a search area, a reference pixel block (BS) is compared with corresponding pixel blocks (SAS) of one or more neighbouring pictures and a motion vector is determined in accordance with the position with the highest correlation in principle, **characterized** in that during this comparison (G1...G6, C1...C6, COM), of the pixel values in each case only the MSB - most significant bit - and/or further of the MSBs - most significant bits -, designated generally as MSBs below, is/are used.

2. Method according to Claim 1, **characterized** in that during the comparison, the MSBs of the pixel values from the reference block (BS) and from the search area (SAS) are logically combined using EXOR or EXNOR functions.

3. Method according to Claim 2, **characterized** in that during the logic combination for each of these pixel values, the result of the EXOR or EXNOR function is added or counted and the motion vector is determined from the search position with the minimum or the maximum of the sum or of the counting results.

4. Method according to Claim 3, **characterized** in that there are added or counted at least n=2 MSBs for each pixel value n EXOR or EXNOR functions, in each case either n parallel counters being used or one counter with an n-fold speed being used.

5. Method according to one or more of Claims 1 to 4, **characterized** in that respective defined values, in particular values matched to picture statistics, are added and/or subtracted to one or more of the MSBs prior to the comparison.

6. Method according to one or more of Claims 1 to 5, **characterized** in that different ones of the MSBs are evaluated for different pixel values within a pixel block during the comparison.

7. Apparatus for a method according to one or more of Claims 1 to 6, for motion estimation in video signals, in which, in each case within a search area, a reference pixel block (BS) is compared with corresponding pixel blocks (SAS) of one or more neighbouring pictures and a motion vector is determined in accordance with the position with the highest correlation in principle, provided with:
- storage means (BS, SAS) for storing the reference pixel block and the pixel blocks of one or more neighbouring pictures;
- EXOR or EXNOR gates (G1, G2,... G6...), which are connected to the storage means and to which in each case only the MSB (most significant bit) and/or further of the MSBs (most significant bits), generally designated as MSBs below, of these pixel values is or are fed;
- means (C1, C2,..., C6,..., COM, CO) for the addition, counting and/or buffer-storage of the comparison results for each of these pixel values from the EXOR or EXNOR gates, which determine the motion vector from the search position with the minimum or the maximum of the sum or of the counting result.

8. Apparatus according to Claim 7, **characterized** in that at least n=2 MSBs for each pixel value are added or counted in n parallel EXOR or EXNOR gates (G1, G2,..., G6...), in each case either n parallel counters being used or one counter with an n-fold speed being used.

9. Apparatus according to Claim 7 or 8, **characterized** in that respective defined values, in particular values matched to picture statistics, are added to and/or subtracted from one or more of the MSBs prior to the comparison.

10. Method or apparatus according to one or more of Claims 1 to 9 for use in MPEG TV systems, in digital video recorders and/or in moving picture transmission via telephone lines (ISDN).

## Revendications

1. Méthode de détection de mouvement dans des signaux vidéo où un bloc d'éléments vidéo de référence (BS) est comparé, dans une zone de recherche, à des blocs d'éléments vidéo correspondants (SAS) d'une ou de plusieurs images voisines et un vecteur de mouvement est calculé avec la corrélation en principe la plus élevée en fonction de sa position, **caractérisée en ce que** lors de cette comparaison (G1...G6, C1...C6, COM) des valeurs d'éléments vidéo, seul le MBS - most significant bit - et/ou les MBS's - most significant bits -, dénommés généralement par la suite MBS's, est/sont utilisé(s).

2. Méthode conforme à la revendication 1, **caractérisée en ce que** les MSB's des valeurs d'éléments vidéo issus du bloc de référence (BS) et de la zone de recherche (SAS) sont mis en relation avec les fonctions EXOR ou EXNOR lors de la comparaison.

3. Méthode conforme à la revendication 2, **caractérisée en ce que** lors de la mise en relation de chacune de ces valeurs d'éléments vidéo, le résultat de la fonction EXOR ou EXNOR est totalisé ou comptabilisé et le vecteur de mouvement est déterminé à partir de la position de recherche, avec le minimum ou le maximum de la somme ou du résultat de comptage.

4. Méthode conforme à la revendication 3, **caractérisée en ce qu'**au moins n=2 MSB's pour toute valeur d'élément vidéo, dans n fonctions EXOR ou EXNOR totalisées ou comptabilisées, où n compteurs parallèles sont utilisés ou un compteur est utilisé à la vitesse n.

5. Méthode conforme à une ou plusieurs des revendications 1 à 4, **caractérisée en ce que** des valeurs, déterminées avant la comparaison, adaptées particulièrement aux statistiques de l'image, sont ajoutées et/ou soustraites à un ou plusieurs des MSB's.

6. Méthode conforme à une ou plusieurs des revendications 1 à 5, **caractérisée en ce que** dans un bloc d'éléments vidéo différents MSB's sont détectés lors de la comparaison de différentes valeurs d'éléments vidéo.

7. Appareil utilisé pour une méthode conforme à une ou plusieurs des revendications 1 à 6 de détection de mouvement dans des signaux vidéo, où un bloc d'éléments vidéo de référence (BS) est comparé dans une zone de recherche à des blocs d'éléments vidéo correspondants (SAS) d'une ou de plusieurs images voisines et un vecteur de mouvement est calculé avec la corrélation en principe la plus élevée en fonction de la position, possédant :
- des dispositifs de mémorisation (BS, SAS) du bloc d'éléments vidéo de référence et des blocs d'éléments vidéo d'une ou de plusieurs images voisines ;
- des fonctions EXOR et EXNOR (G1, G2,..., G6...) reliées aux dispositifs de mémorisation, auxquelles seul le MBS (most significant bit) et/ou d'autres MBS's (most significant bits), dénommés généralement par la suite MBS's, de ces valeurs d'éléments vidéo est/sont acheminé(s) ;
- des dispositifs (C1, C2,..., C6,..., COM, CO) d'addition, de comptage et/ou de mémorisation intermédiaire des résultats de comparaison de chaque valeur d'élément vidéo issue des fonctions EXOR ou EXNOR qui déterminent le vecteur de mouvement à partir de la position de recherche avec le minimum ou le maximum de la somme ou du résultat du comptage.

8. Appareil conforme à la revendication 7, **caractérisé en ce qu'**au moins n=2 MSB's pour toute valeur d'élément vidéo dans n fonctions parallèles EXOR ou EXNOR (G1, G2,..., G6...) totalisées ou comptabilisées, où n compteurs parallèles sont utilisés ou un compteur est utilisé à la vitesse n.

9. Appareil conforme à la revendication 7 ou 8, **caractérisé en ce que** des valeurs, déterminées avant la comparaison, adaptées particulièrement aux statistiques de l'image, sont ajoutées et/ou soustraites à un ou plusieurs des MSB's.

10. Appareil conforme à une ou plusieurs des revendications 1 à 9, pour l'application aux systèmes MPEG, aux magnétoscopes numériques et/ou sur des lignes téléphoniques (ISDN), dans le cas d'une transmission d'images en mouvement.
